# EUROPÄISCHE PATENTSCHRIFT

(11) **EP 4 623 550 B1**
(45) Veröffentlichungstag und Bekanntmachung des Hinweises auf die Patenterteilung: **15.07.2026**
(21) Anmeldenummer: 24702239.5
(22) Anmeldetag: 12.01.2024
(51) Int. Cl.: H04L 9/40, H04L 9/08, H04L 9/32, H04L 67/12

(54) **VERFAHREN UND ENDGERÄT ZUR KRYPTOGRAPHISCH GESICHERTEN ÜBERMITTLUNG VON DATEN INNERHALB EINES KOMMUNIKATIONSSYSTEMS**
METHOD AND TERMINAL FOR CRYPTOGRAPHICALLY SECURE TRANSMISSION OF DATA WITHIN A COMMUNICATION SYSTEM
PROCÉDÉ ET TERMINAL POUR LA TRANSMISSION SÉCURISÉE CRYPTOGRAPHIQUE DE DONNÉES DANS UN SYSTÈME DE COMMUNICATION

(30) Priorität: 31.01.2023 EP 23154280
(43) Veröffentlichungstag der Anmeldung: 01.10.2025
(73) Patentinhaber: Siemens Aktiengesellschaft, 80333 München (DE)
(72) Erfinder: HARDES, Hubert, 91056 Erlangen (DE)
(74) Vertreter: Siemens Patent Attorneys
(86) Internationale Anmeldenummer: PCT/EP2024/050687
(87) Internationale Veröffentlichungsnummer: WO 2024/160513

(56) Entgegenhaltungen:
- EP-A1- 3 700 160
- US-A1- 2018 323 977
- US-B1- 10 277 406
- GUTMANN UNIVERSITY OF AUCKLAND P: "Simple Certificate Enrolment Protocol; rfc8894.txt", 10 September 2020 (2020-09-10), pages 1 - 26, XP015142102, Retrieved from the Internet <URL:https://tools.ietf.org/html/rfc8894> [retrieved on 20200910]

## Beschreibung

Die vorliegende Erfindung betrifft ein Verfahren zur kryptographisch gesicherten Übermittlung von Daten innerhalb eines Kommunikationssystems, insbesondere von zeitkritischen Daten innerhalb eines Kommunikationssystems für ein industrielles Automatisierungssystem und ein Endgerät zur Durchführung des Verfahrens.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Aus EP 3 646 559 B1 ist ein Verfahren zur Überprüfung von innerhalb eines industriellen Automatisierungssystems mit mehreren Automatisierungszellen übermittelten Datagrammen bekannt, bei dem zu überprüfende Datagramme aus den Automatisierungszellen über eine jeweilige Firewall-Schnittstelle zur Überprüfung an Firewall-System übermittelt und dort regelbasiert überprüft werden. Das Firewall-System wird durch zumindest eine innerhalb eines mehrere Rechnereinheiten umfassenden Datenverarbeitungssystems bereitgestellte virtuelle Maschine gebildet. Zur Übermittlung der zu überprüfenden Datagramme wird jeweils ein Sicherungsschicht-Tunnel zwischen der jeweiligen Firewall-Schnittstelle und dem Firewall-System aufgebaut. Sowohl zu prüfende Datagramme als auch zumindest erfolgreich überprüfte Datagramme werden innerhalb des jeweiligen Sicherungsschicht-Tunnels übermittelt.

In EP 3 975 502 A1 ist ein Verfahren zur Bereitstellung von zeitkritischen Diensten mittels einer Ablaufsteuerungsumgebung beschrieben, bei dem für jeden Dienst jeweils zumindest eine Server-Komponente vorgesehen ist, die durch eine in die Ablaufsteuerungsumgebung ladbare und dort ausführbare Ablaufsteuerungskomponente gebildet wird. Eine Konfigurationseinheit für zumindest eine Gateway-Komponente eines die Ablaufsteuerungsumgebung umfassenden Teilnetzes ermittelt jeweils zu innerhalb des Teilnetzes gültigen Adressierungsinformationen der Server-Komponenten zugeordnete global gültige Zugangsinformationen. In Abhängigkeit von einem mittels der Konfigurationseinheit vorgegebenen Betriebsmodus werden eine oder mehrere parallel bzw. seriell verbundene Gateway-Komponenten verwendet. Die zumindest eine Gateway-Komponente leitet Dienstzugriffsanfragen entsprechend Weiterleitungs- bzw. Filterregeln, welche die Zugangsinformationen abbilden, und dem Betriebsmodus an die Server-Komponenten weiter.

Die ältere europäische Patentanmeldung EP 4 283 925 A1 betrifft eine gesicherten Übermittlung zeitkritischer Daten innerhalb eines Kommunikationssystems, das mehrere lokale Netze, in dem Daten mittels Switching übermittelt werden, zumindest ein gegenüber den lokalen Netzen überlagertes Netz, in dem Daten mittels Routing übermittelt werden, und ein Gateway-System zur Anbindung des Kommunikationssystems an zumindest ein ungesichertes externes Netz umfasst. Netzwerkschicht-Kommunikation über das überlagerte Netz wird nur zwischen authentifizierten Systemkomponenten autorisiert. Switche authentifizieren jeweils angeschlossene Endgeräte und ordnen diese entsprechend einer jeweiligen Endgeräte-Identität einem physikalischen oder logischen lokalen Netz zu. Sicherungsschicht-Kommunikation wird innerhalb der lokalen Netze implizit aufgrund einer Zuordnung der jeweiligen Endgeräte zum selben lokalen Netz autorisiert. Kommunikation auf OSI-Schicht 3-7 zwischen Endgeräten unterschiedlicher lokaler Netze bzw. mit Endgeräten im ungesicherten externen Netz wird mittels Zero Trust-Proxies autorisiert, die jeweils einem lokalen Netz zugeordnet sind.

Aus US 2018/323977 A1 ist ein Verfahren bekannt, das einen Empfang einer Zertifikatsanforderung für eine Zertifizierungsstelle und eines ersten digitalen Zertifikats von einem Gerät umfasst. Die Zertifikatsanforderung wird vom Gerät digital signiert und an eine Zertifizierungsstelle übermittelt. Außerdem wird das erste digitale Zertifikat im Gerät gespeichert. Das erste digitale Zertifikat wird durch die Zertifizierungsstelle mittels eines zweiten digitalen Zertifikats einer anderen Zertifizierungsstelle überprüft. Die digitale Signatur der Zertifikatsanforderung wird unter Verwendung des ersten digitalen Zertifikats verifiziert. Schließlich wird nach Verifizieren des ersten digitalen Zertifikats und der digitalen Signatur ein zweites digitales Zertifikat an das Gerät übermittelt.

In industrielle Automatisierungsgeräte bzw. Endgeräte, die zur Steuerung von Maschinen bzw. Vorrichtungen zeitkritische Daten mit Kommunikationspartnern austauschen, sind besonders gegenüber einer Manipulation und einem Mitlesen sensibler Daten zu schützen. Eine Schutzmaßnahme ist insbesondere eine Verschlüsselung von Kommunikation von bzw. zu oben genannten Geräten. Hierfür werden üblicherweise Verschlüsselungsprotokolle, wie TLS (Transport Layer Security) oder SSL (Secure Socket Layer), verwendet, die für jedes Gerät eine Bereitstellung eines Schlüsselpaars und eines auf einem öffentlichen Schlüssel des Schlüsselpaars basierendes Zertifikat vorsehen.

Um eine sichere Kommunikation gewährleisten zu können, müssen alle Kommunikationspartner den Zertifikaten der oben genannten Geräte vertrauen können. Eine Verwendung von durch die Geräte erzeugten Self-Signed Zertifikaten ist insbesondere aufgrund möglicher "Man in the Middle"-Angriffe und eines problematischen Echtheitsnachweises grundsätzlich ungeeignet. Auch eine Geräte-externe Erzeugung von Schlüsselpaaren und Zertifikaten durch eine Certification Authority (CA) einer Public-Key-Infrastruktur (PKI) ist nicht gänzlich unproblematisch, da ein privater Schlüssel eines solchen Schlüsselpaars während einer Übertragung auf das jeweilige Gerät potentiell mitgelesen werden kann. Darüber hinaus müssen insbesondere TLS-Zertifikate aus Sicherheitsgründen regelmäßig erneuert werden. Daher sind die durch eine Certification Authority erzeugte Schlüsselpaare und Zertifikate regelmäßig auf die Geräte zu übertragen. In industriellen Automatisierungssystemen ist hiervon eine große Anzahl an Geräten betroffen.

Der vorliegenden Erfindung liegt daher die Aufgabe zugrunde, ein Verfahren zur kryptographisch gesicherten Übermittlung insbesondere zeitkritischer Daten innerhalb eines Kommunikationssystems zu schaffen, das eine aufwandsarme, effiziente und dennoch sichere Bereitstellung von Schlüsselmaterial und Zertifikaten an Endgeräte des Kommunikationssystems ermöglicht, und geeignete Vorrichtung zur technischen Realisierung des Verfahrens anzugeben.

Diese Aufgabe wird erfindungsgemäß durch ein Verfahren mit den in Patentanspruch 1 angegebenen Merkmalen und durch ein Endgerät mit den in Patentanspruch 12 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur kryptographisch gesicherten Übermittlung insbesondere zeitkritischer Daten innerhalb eines Kommunikationssystems umfasst das Kommunikationssystem zumindest einen Switch oder Router und mehrere Endgeräte, die zur Steuerung von Maschinen bzw. Vorrichtungen insbesondere zeitkritische Daten austauschen. Die Endgeräte, insbesondere eingebettete Systeme bzw. Embedded Systems, umfassen jeweils eine lokale Zertifizierungsinstanz, die bei einer Inbetriebnahme des jeweiligen Endgeräts ein erstes Schlüsselpaar für das Endgerät und einen Antrag zur Erstellung eines dem ersten Schlüsselpaar zugeordneten Zertifikats erzeugt und im Rahmen eines abgesicherten Betriebs des Endgeräts den Antrag an eine übergeordnete Zertifizierungsinstanz übermittelt. Die durch die lokalen Zertifizierungsinstanzen erstellten Anträge sind vorzugsweise Certificate Signing Requests (CSR), die insbesondere eine Seriennummer des jeweiligen Endgeräts umfassen.

Das Kommunikationssystem kann insbesondere von einem industriellen Automatisierungssystem umfasst sein. Vorteilhafterweise umfassen die übergeordnete Zertifizierungsinstanz und die lokalen Zertifizierungsinstanzen jeweils Funktionen einer Certification Authority (CA). Darüber hinaus umfassen die lokalen Zertifizierungsinstanzen vorzugsweise jeweils Funktionen einer der übergeordneten Zertifizierungsinstanz zugeordneten Registration Authority (RA).

Erfindungsgemäß prüft die übergeordnete Zertifizierungsinstanz jeweils die Anträge der lokalen Zertifizierungsinstanzen der Endgeräte. Bei erfolgreicher Prüfung erstellt die übergeordnete Zertifizierungsinstanz ein dem jeweiligen ersten Schlüsselpaar zugeordnetes Zertifikat und übermittelt dieses an die jeweilige lokale Zertifizierungsinstanz. Die durch übergeordnete Zertifizierungsinstanz erzeugten Zertifikate sind vorzugsweise Issuing-Zertifikate, TLS oder SSL Client Certificates bzw. TLS oder SSL Server Certificates.

Die Endgeräte beenden erfindungsgemäß jeweils nach Empfang des durch die übergeordnete Zertifizierungsinstanz erzeugten Zertifikats den abgesicherten Betrieb. Nach Beenden des abgesicherten Betriebs erzeugen die lokalen Zertifizierungsinstanzen für einen kryptographisch gesicherten Austausch insbesondere zeitkritischer Daten von bzw. zu den Endgeräten jeweils zumindest ein zweites Schlüsselpaar und ein Zertifikat für das zweite Schlüsselpaar. Dabei wird das Zertifikat für das zweite Schlüsselpaar mittels eines vom ersten Schlüsselpaar umfassten privaten Schlüssels signiert. Vorzugsweise wird der Austausch insbesondere zeitkritischer Daten von bzw. zu den Endgeräten jeweils mittels des zweiten Schlüsselpaars kryptographisch gesichert. Das Zertifikat für das zweite Schlüsselpaar kann durch einen Kommunikationspartner des jeweiligen Endgeräts beim Austausch insbesondere zeitkritischer Daten vorteilhafterweise einfache unter Verwendung eines Root-Zertifikats der übergeordnete Zertifizierungsinstanz verifiziert werden.

Im Vergleich zu bisherigen Verfahren ist das erfindungsgemäße Verfahren sicherer, da die privaten Schlüssel bzw. zur Schlüsselerzeugung erforderliche Informationen in den Endgeräten selbst erzeugt werden und die Endgeräte somit nicht verlassen. Dadurch ist ein Mitlesen von privaten Schlüsseln während einer Schlüsselübermittlung ausgeschlossen. Außerdem entfällt insbesondere bei Verwendung von TLS-Zertifikaten deren bisher regelmäßig erforderliche Verteilung, da die Zertifikate für die zweiten Schlüsselpaare ausgehend von dem einmalig für das erste Schlüsselpaar durch die übergeordnete Zertifizierungsinstanz erzeugten Zertifikat durch die Endgeräte bei Bedarf selbst erzeugt werden können. Zudem ermöglicht die vorliegende Erfindung eine Realisierung einfach skalierbarer Security-Lösungen für industrielle Automatisierungssysteme, da ein Realisierungsaufwand auf Seiten der übergeordneten Zertifizierungsinstanz weitestgehend unabhängig von einer Anzahl der Endgeräte ist, die ihre zur kryptographisch gesicherten Kommunikation verwendeten Zertifikate selbst erstellen.

Erfindungsgemäß ist während des abgesicherten Betriebs der Endgeräte nur eine Kommunikation zwischen der jeweiligen lokalen Zertifizierungsinstanz und der übergeordneten Zertifizierungsinstanz möglich. Für den abgesicherten Betrieb der Endgeräte kann beispielsweise jeweils eine vorgegebene Default Gateway-Konfiguration bzw. vorgegebene Firewall-Einstellungen aktiviert sein. Alternativ oder zusätzlich können die Endgeräte und die übergeordnete Zertifizierungsinstanz während des abgesicherten Betriebs der Endgeräte jeweils innerhalb einer gegenüber anderen Endgeräten zumindest virtuell isolierten Umgebung miteinander verbunden sein.

Die Anträge der lokalen Zertifizierungsinstanzen umfassen entsprechend einer weiteren vorteilhaften Ausgestaltung der vorliegenden Erfindung jeweils einen Identifikator des jeweiligen Endgeräts, insbesondere ein IDevID-Zertifikat (Initial Device Identifier), bzw. eine durch die jeweilige lokale Zertifizierungsinstanz erstellte Signatur. In diesem Fall umfasst die Prüfung der Anträge durch die übergeordnete Zertifizierungsinstanz jeweils eine Überprüfung des Identifikators des jeweiligen Endgeräts bzw. der durch die jeweilige lokale Zertifizierungsinstanz erstellten Signatur auf Gültigkeit. Somit kann eine effiziente und zuverlässige Zertifikateüberprüfung realisiert werden.

IDevID-Zertifikate werden vorzugsweise jeweils bei Geräteherstellung gemäß IEEE 802.1 AR in den Endgeräten einschließlich eines dem jeweiligen IDevID-Zertifikat zugeordneten privaten Schlüssels gespeichert. Dabei umfassen die IDevID-Zertifikate jeweils die Seriennummer des jeweiligen Endgeräts und sind durch einen jeweiligen Hersteller signiert. Im Gegensatz zum jeweils zugeordneten privaten Schlüssel können die IDevID-Zertifikate nach Geräteherstellung ausgelesen werden. Damit kann eine Identität eines Endgeräts überprüft werden, indem das IDevID-Zertifikat ausgelesen und anhand eines Root-Zertifikats des jeweiligen Herstellers auf Gültigkeit überprüft wird. Insbesondere wird bei einer Überprüfung der Identität eines Endgeräts eine von einem Certificate Signing Request umfasste Seriennummer auf Übereinstimmung mit der vom IDevID-Zertifikat umfassten Seriennummer verglichen. Außerdem beweist das Endgerät einen Zugriff auf den privaten Schlüssel, der dem IDevID-Zertifikat zugeordnet ist, mittels eines Challenge-Response-Verfahrens bzw. durch Signatur einer an das Endgerät gesendeten Zufallszahl mittels des privaten Schlüssels.

Das erfindungsgemäße Endgerät zur kryptographisch gesicherten Übermittlung insbesondere zeitkritischer Daten innerhalb eines Kommunikationssystems ist insbesondere zur Durchführung eines Verfahrens entsprechend vorangehenden Ausführungen ausgestaltet und eingerichtet. Erfindungsgemäß ist das Endgerät dafür ausgestaltet und eingerichtet, zur Steuerung von Maschinen bzw. Vorrichtungen insbesondere zeitkritische Daten innerhalb des Kommunikationssystems auszutauschen. Außerdem umfasst das Endgerät eine lokale Zertifizierungsinstanz, die dafür ausgestaltet und eingerichtet ist, bei einer Inbetriebnahme des Endgeräts ein erstes Schlüsselpaar für das Endgerät und einen Antrag zur Erstellung eines dem ersten Schlüsselpaar zugeordneten Zertifikats zu erzeugen und im Rahmen eines abgesicherten Betriebs des Endgeräts den Antrag an eine übergeordnete Zertifizierungsinstanz zu übermitteln.

Ferner ist das erfindungsgemäße Endgerät dafür ausgestaltet und eingerichtet, nach Empfang eines durch die übergeordnete Zertifizierungsinstanz für das erste Schlüsselpaar erzeugten Zertifikats den abgesicherten Betrieb zu beenden. Zusätzlich ist die lokale Zertifizierungsinstanz dafür ausgestaltet und eingerichtet, nach Beenden des abgesicherten Betriebs für einen kryptographisch gesicherten Austausch insbesondere zeitkritischer Daten vom bzw. zum Endgerät zumindest ein zweites Schlüsselpaar und ein Zertifikat für das zweite Schlüsselpaar zu erzeugen. Dabei ist dieses Zertifikat mittels eines vom ersten Schlüsselpaar umfassten privaten Schlüssels signiert.

Die vorliegende Erfindung nachfolgend an einem Ausführungsbeispiel anhand der Zeichnung näher erläutert. Es zeigt
- Figur 1: ein industrielles Automatisierungssystem, das mehrere Automatisierungsgeräte sowie eine übergeordnete Zertifizierungsinstanz umfasst und in dem insbesondere zeitkritische Daten kryptographisch gesichert von bzw. zu den Automatisierungsgeräten übermittelt werden,
- Figur 2: eine Darstellung eines Verfahrensablaufs für eine Verifizierung von für eine kryptographisch gesicherte Datenübermittlung bereitgestellten Zertifikaten.

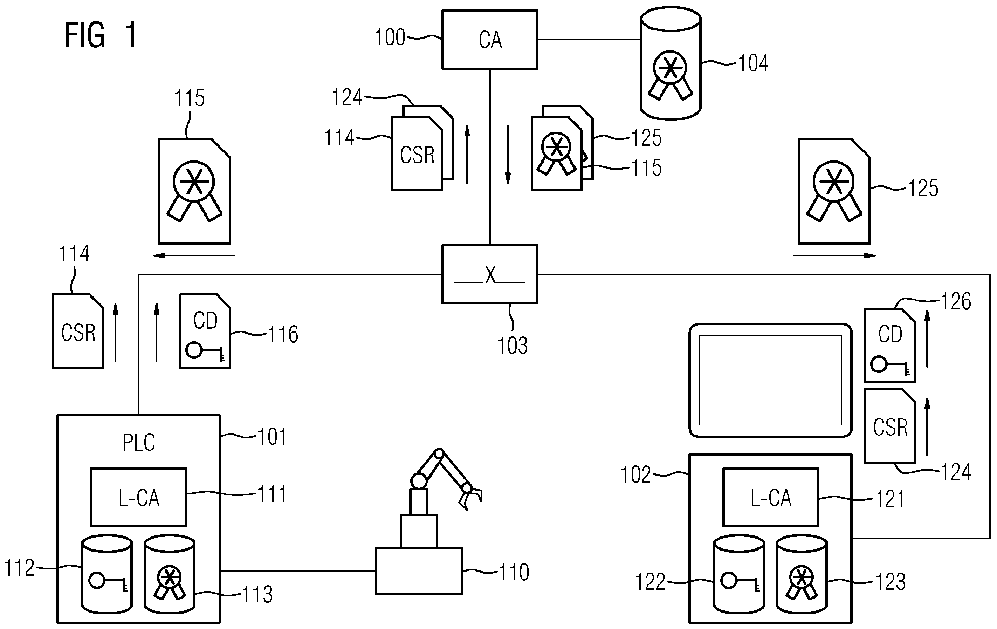

Das in Figur 1 dargestellte industrielle Automatisierungssystem weist eine übergeordnete Zertifizierungsinstanz 100, mehrere Automatisierungsgeräte 101-102 und einen Switch 103 auf, der die übergeordnete Zertifizierungsinstanz 100 und die Automatisierungsgeräte 101-102 miteinander verbindet. Die Automatisierungsgeräte 101-102 tauschen untereinander insbesondere zeitkritische Daten 116, 126 zur Steuerung von Maschinen bzw. Vorrichtungen 110 aus.

Die Automatisierungsgeräte 101-102 können insbesondere physische oder virtuelle Hosts sein, die Daten bzw. Ressourcen für andere Hosts bereitstellen. Die Daten bzw. Ressourcen können beispielsweise Diensten bzw. Steuerungs- und Überwachungsanwendungen eines industriellen Automatisierungssystems zugeordnet sein, die exemplarisch für zeitkritische Dienste bzw. Anwendungen sind.

Im vorliegenden Ausführungsbeispiel implementieren die Automatisierungsgeräte 101-102 Funktionen von Steuerungsgeräten eines industriellen Automatisierungssystems, wie speicherprogrammierbaren Steuerungen oder Maschinensteuerungen, oder von Feldgeräten, wie Sensoren oder Aktoren. Dabei dienen die Automatisierungsgeräte 101-102 einem Austausch von Steuerungs- und Messgrößen mit durch Steuerungsgeräte gesteuerten Maschinen oder Vorrichtungen 110. Insbesondere sind die Steuerungsgeräte für eine Ermittlung geeigneter Steuerungsgrößen aus erfassten Messgrößen vorgesehen.

Alternativ oder zusätzlich können die Automatisierungsgeräte 101-102 jeweils eine Bedien- und Beobachtungsstation implementieren und zur Visualisierung von Prozessdaten bzw. Mess- und Steuerungsgrößen dienen, die durch Steuerungsgeräte oder andere Automatisierungsgeräte verarbeitet bzw. erfasst werden. Insbesondere kann eine Bedien- und Beobachtungsstation zur Anzeige von Werten eines Regelungskreises und zur Veränderung von Regelungsparametern oder -programmen verwendet werden.

Zur kryptographisch gesicherten Übermittlung zeitkritischer Daten 116, 126 innerhalb des industriellen Automatisierungssystems umfassen die Automatisierungsgeräte jeweils eine lokale Zertifizierungsinstanz 111, 121, die bei einer Inbetriebnahme des jeweiligen Automatisierungsgerät ein erstes Schlüsselpaar für das jeweilige Automatisierungsgerät 101-102 und einen Antrag 114, 124 zur Erstellung eines dem ersten Schlüsselpaar zugeordneten Zertifikats erzeugt. Das erste Schlüsselpaar wird vorzugsweise in einem besonders gesicherten Schlüsselspeicher 112, 122 des jeweiligen Automatisierungsgeräts 101-102 hinterlegt. Für Zertifikate ist beispielsweise jeweils ein gesonderter Zertifikatespeicher 113, 123 vorgesehen.

Im Rahmen eines abgesicherten Betriebs des jeweiligen Automatisierungsgeräts 101-102, insbesondere während eines Onboarding-Vorgangs, wird der Antrag 114, 124 an die übergeordnete Zertifizierungsinstanz 100 übermittelt. Im vorliegenden Ausführungsbeispiel umfassen die übergeordnete Zertifizierungsinstanz 100 und die lokalen Zertifizierungsinstanzen 111, 121 jeweils Funktionen einer Certification Authority (CA). Darüber hinaus umfassen die lokalen Zertifizierungsinstanzen 111, 121 jeweils Funktionen einer der übergeordneten Zertifizierungsinstanz 100 zugeordneten Registration Authority (RA).

Während des abgesicherten Betriebs der Automatisierungsgeräte 101-102 kann beispielsweise vorgesehen sein, dass im Wesentlichen nur eine Kommunikation zwischen der jeweiligen lokalen Zertifizierungsinstanz 111, 121 und der übergeordneten Zertifizierungsinstanz 100 möglich ist. Außerdem können für den abgesicherten Betrieb der Automatisierungsgeräte 101-102 jeweils eine vorgegebene Default Gateway-Konfiguration bzw. vorgegebene Firewall-Einstellungen aktiviert sein. Insbesondere können die Automatisierungsgeräte 101-102 und die übergeordnete Zertifizierungsinstanz 100 während des abgesicherten Betriebs der Automatisierungsgeräte 101-102 jeweils innerhalb einer gegenüber anderen Automatisierungs- bzw. Endgeräten zumindest virtuell isolierten Umgebung miteinander verbunden sein.

Die übergeordnete Zertifizierungsinstanz 100 prüft jeweils die Anträge 114, 124 der lokalen Zertifizierungsinstanzen 111, 121 der Automatisierungsgeräte 101-102. Bei erfolgreicher Prüfung erstellt die übergeordnete Zertifizierungsinstanz 100 ein dem jeweiligen ersten Schlüsselpaar zugeordnetes Zertifikat 115, 125 und übermittelt dieses an die jeweilige lokale Zertifizierungsinstanz 111, 121. Die durch die lokalen Zertifizierungsinstanzen 111, 121 erstellten Anträge 114, 124 sind vorzugsweise Certificate Signing Requests (CSR) und umfassen beispielsweise eine Seriennummer des jeweiligen Automatisierungsgeräts 101-102.

Vorteilhafterweise umfassen die Anträge 114, 124 der lokalen Zertifizierungsinstanzen 111, 121 jeweils ein IDevID-Zertifikat (Initial Device Identifier) als Identifikator des jeweiligen Automatisierungsgeräts 101-102. Alternativ oder zusätzlich können die Anträge 114, 124 eine durch die jeweilige lokale Zertifizierungsinstanz 111, 121 erstellte Signatur umfassen. Dementsprechend umfasst die Prüfung der Anträge 114, 124 durch die übergeordnete Zertifizierungsinstanz 100 jeweils eine Überprüfung des Identifikators des jeweiligen Automatisierungsgeräts 101-102 bzw. der durch die jeweilige lokale Zertifizierungsinstanz 111, 121 erstellten Signatur auf Gültigkeit.

Die IDevID-Zertifikate werden vorzugsweise einschließlich eines dem jeweiligen IDevID-Zertifikat zugeordneten privaten Schlüssels jeweils gemäß IEEE 802.1 AR bei Geräteherstellung im Zertifikatespeicher 113, 123 bzw. im Schlüsselspeicher 112, 122 des jeweiligen Automatisierungsgeräts 101-102 gespeichert. Insbesondere umfassen die IDevID-Zertifikate jeweils die Seriennummer des jeweiligen Automatisierungsgeräts 101-102 und sind durch einen jeweiligen Hersteller signiert. Im Gegensatz zum jeweils zugeordneten, im Schlüsselspeicher 112, 122 besonders gesicherten privaten Schlüssel können die IDevID-Zertifikate nach Geräteherstellung ausgelesen werden. Damit kann eine Identität eines Automatisierungsgeräts 101-102 überprüft werden, indem das IDevID-Zertifikat ausgelesen und anhand eines Root-Zertifikats des jeweiligen Herstellers auf Gültigkeit überprüft wird.

Im vorliegenden Ausführungsbeispiel vergleicht die übergeordnete Zertifizierungsinstanz 100 bei einer Überprüfung der Identität eines Automatisierungsgeräts 101-102 eine von einem Certificate Signing Request umfasste Seriennummer auf Übereinstimmung mit der vom IDevID-Zertifikat umfassten Seriennummer. Außerdem beweist das Automatisierungsgerät 101-102 einen Zugriff auf den privaten Schlüssel, der dem IDevID-Zertifikat zugeordnet ist, mittels eines Challenge-Response-Verfahrens bzw. durch Signatur einer durch die übergeordnete Zertifizierungsinstanz 100 an das Automatisierungsgerät 101-102 gesendeten Zufallszahl mittels des privaten Schlüssels.

Nach Empfang des durch die übergeordnete Zertifizierungsinstanz 100 erzeugten Zertifikats 115, 125 beenden die Automatisierungsgeräte 101-102 jeweils den abgesicherten Betrieb.

Die durch die übergeordnete Zertifizierungsinstanz 100 erzeugten Zertifikate sind vorzugsweise Issuing-Zertifikate. Grundsätzlich ist auch eine Erstellung von TLS oder SSL Client Certificates bzw. TLS oder SSL Server Certificates durch die übergeordnete Zertifizierungsinstanz 100 möglich.

Die lokalen Zertifizierungsinstanzen 111, 121 erzeugen nach Beenden des abgesicherten Betriebs für einen kryptographisch gesicherten Austausch zeitkritischer Daten 116, 126 von bzw. zu den Automatisierungsgeräten 101-102 jeweils zumindest ein zweites Schlüsselpaar und ein Zertifikat für das zweite Schlüsselpaar. Dieses Zertifikat wird mittels eines vom ersten Schlüsselpaar umfassten privaten Schlüssels signiert und im Zertifikatespeicher 113, 123 abgelegt.

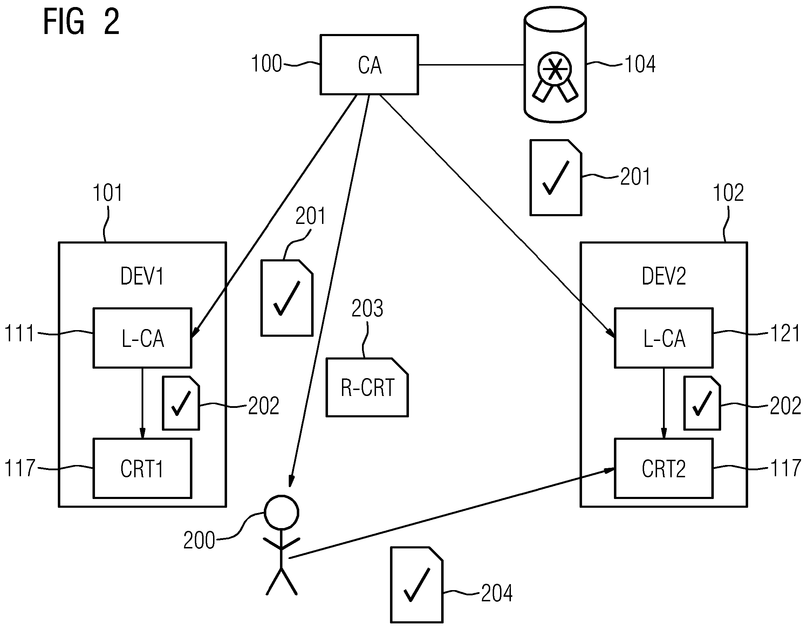

Der Austausch insbesondere zeitkritischer Daten 116, 126 von bzw. zu den Automatisierungsgeräten 101-102 wird jeweils mittels des zweiten Schlüsselpaars kryptographisch gesichert. Entsprechend Schritt 201 des in Figur 2 dargestellten Verfahrensablaufs erfolgt über die Zertifikate für die ersten Schlüsselpaare eine Beglaubigung der lokalen Zertifizierungsinstanzen 111, 121 durch die übergeordnete Zertifizierungsinstanz 100. Die lokalen Zertifizierungsinstanzen 111, 121 beglaubigen gemäß Schritt 202 wiederum die Zertifikate 117 für die selbst erzeugten zweiten Schlüsselpaare.

Ein Kommunikationspartner 200 der Automatisierungsgeräte 101-102 kann entsprechend Schritt 203 ein Root-Zertifikat aus einem Zertifikatespeicher 104 der übergeordneten Zertifizierungsinstanz 100 abrufen. Abschließend wird gemäß Schritt 204 das Zertifikat für das zweite Schlüsselpaar, das mittels des vom ersten Schlüsselpaar umfassten privaten Schlüssels signiert ist, durch den Kommunikationspartner 200 unter Verwendung des Root-Zertifikats der übergeordnete Zertifizierungsinstanz 100 verifiziert.

Im vorliegenden Ausführungsbeispiel erzeugen die Automatisierungsgeräte 101-102 jeweils einem bei durch eine Konfigurationsänderung bedingten Gültigkeitsverlust des Zertifikats für das zweite Schlüsselpaar automatisch ein neues zweites Schlüsselpaar und ein Zertifikat für das neue zweite Schlüsselpaar. Beispielsweise verlieren TLS-Zertifikate nach IP-Adressänderungen ihre Gültigkeit, wenn sie für eine ausgewählte IP-Adresse erstellt worden sind. Somit auch nach derartigen Konfigurationsänderungen weiterhin eine kryptographisch gesicherte Kommunikation gewährleistet.

## Patentansprüche

1. Verfahren zur kryptographisch gesicherten Übermittlung von Daten innerhalb eines Kommunikationssystems, bei dem
- das Kommunikationssystem zumindest einen Switch (103) oder Router und mehrere Endgeräte (101-102) umfasst, die zur Steuerung von Maschinen oder Vorrichtungen (110) Daten austauschen,
- die Endgeräte (101-102) jeweils eine lokale Zertifizierungsinstanz (111, 121) umfassen, die bei einer Inbetriebnahme des jeweiligen Endgeräts ein erstes Schlüsselpaar für das Endgerät und einen Antrag (114, 124) zur Erstellung eines dem ersten Schlüsselpaar zugeordneten Zertifikats erzeugt und im Rahmen eines abgesicherten Betriebs des Endgeräts den Antrag an eine übergeordnete Zertifizierungsinstanz (100) übermittelt, wobei während des abgesicherten Betriebs der Endgeräte (101-102) nur eine Kommunikation zwischen der jeweiligen lokalen Zertifizierungsinstanz (111, 121) und der übergeordneten Zertifizierungsinstanz (100) möglich ist,
- die übergeordnete Zertifizierungsinstanz (100) jeweils die Anträge (114, 124) der lokalen Zertifizierungsinstanzen der Endgeräte prüft und bei erfolgreicher Prüfung ein dem jeweiligen ersten Schlüsselpaar zugeordnetes Zertifikat (115, 125) erstellt und an die jeweilige lokale Zertifizierungsinstanz (111, 121) übermittelt,
- die Endgeräte (101-102) jeweils nach Empfang des durch die übergeordnete Zertifizierungsinstanz erzeugten Zertifikats den abgesicherten Betrieb beenden,
- die lokalen Zertifizierungsinstanzen (111, 121) nach Beenden des abgesicherten Betriebs für einen kryptographisch gesicherten Austausch von Daten (116, 126) von und zu den Endgeräten jeweils zumindest ein zweites Schlüsselpaar und ein Zertifikat für das zweite Schlüsselpaar erzeugen, wobei dieses Zertifikat mittels eines vom ersten Schlüsselpaar umfassten privaten Schlüssels signiert wird.

2. Verfahren nach Anspruch 1,
bei dem für den abgesicherten Betrieb der Endgeräte jeweils eine vorgegebene Default Gateway-Konfiguration und/oder vorgegebene Firewall-Einstellungen aktiviert sind.

3. Verfahren nach einem der Ansprüche 1 bis 2,
bei dem die Endgeräte und die übergeordnete Zertifizierungsinstanz während des abgesicherten Betriebs der Endgeräte jeweils innerhalb einer gegenüber anderen Endgeräten isolierten Umgebung miteinander verbunden sind.

4. Verfahren nach einem der Ansprüche 1 bis 3,
bei dem die Anträge der lokalen Zertifizierungsinstanzen jeweils einen Identifikator des jeweiligen Endgeräts und/oder eine durch die jeweilige lokale Zertifizierungsinstanz erstellte Signatur umfassen und bei dem die Prüfung der Anträge durch die übergeordnete Zertifizierungsinstanz jeweils eine Überprüfung des Identifikators des jeweiligen Endgeräts und/oder der durch die jeweilige lokale Zertifizierungsinstanz erstellten Signatur auf Gültigkeit umfasst.

5. Verfahren nach einem der Ansprüche 1 bis 4,
bei dem der Austausch von Daten von und/oder zu den Endgeräten jeweils mittels des zweiten Schlüsselpaars kryptographisch gesichert wird.

6. Verfahren nach Anspruch 5,
bei dem das mittels des vom ersten Schlüsselpaar umfassten privaten Schlüssels signierte Zertifikat für das zweite Schlüsselpaar durch einen Kommunikationspartner des jeweiligen Endgeräts beim Austausch von Daten unter Verwendung eines Root-Zertifikats der übergeordnete Zertifizierungsinstanz verifiziert wird.

7. Verfahren nach einem der Ansprüche 1 bis 6,
bei dem die durch die lokalen Zertifizierungsinstanzen erstellten Anträge Certificate Signing Requests sind und bei dem die durch übergeordnete Zertifizierungsinstanz erzeugten Zertifikate Issuing-Zertifikate, TLS oder SSL Client Certificates und/oder TLS oder SSL Server Certificates sind.

8. Verfahren nach einem der Ansprüche 1 bis 7,
bei dem die übergeordnete Zertifizierungsinstanz und die lokalen Zertifizierungsinstanzen jeweils Funktionen einer Certification Authority umfassen.

9. Verfahren nach Anspruch 8,
bei dem die lokalen Zertifizierungsinstanzen jeweils Funktionen einer der übergeordneten Zertifizierungsinstanz zugeordneten Registration Authority umfassen.

10. Verfahren nach einem der Ansprüche 1 bis 9,
bei dem das Kommunikationssystem von einem industriellen Automatisierungssystem umfasst ist.

11. Verfahren nach einem der Ansprüche 1 bis 10,
bei dem die Endgeräte jeweils einem bei durch eine Konfigurationsänderung bedingten Gültigkeitsverlust des Zertifikats für das zweite Schlüsselpaar automatisch ein neues zweites Schlüsselpaar und ein Zertifikat für das neue zweite Schlüsselpaar erzeugen.

12. Endgerät zur kryptographisch gesicherten Übermittlung von Daten innerhalb eines Kommunikationssystems, wobei
- das Endgerät dafür ausgestaltet und eingerichtet ist, zur Steuerung von Maschinen und/oder Vorrichtungen (100) Daten (116, 126) innerhalb des Kommunikationssystems auszutauschen,
- das Endgerät eine lokale Zertifizierungsinstanz (111, 121) umfasst, die dafür ausgestaltet und eingerichtet ist, bei einer Inbetriebnahme des Endgeräts ein erstes Schlüsselpaar für das Endgerät und einen Antrag (114, 124) zur Erstellung eines dem ersten Schlüsselpaar zugeordneten Zertifikats zu erzeugen und im Rahmen eines abgesicherten Betriebs des Endgeräts den Antrag an eine übergeordnete Zertifizierungsinstanz (100) zu übermitteln, wobei während des abgesicherten Betriebs nur eine Kommunikation zwischen der lokalen Zertifizierungsinstanz und der übergeordneten Zertifizierungsinstanz möglich ist,
- das Endgerät ferner dafür ausgestaltet und eingerichtet ist, nach Empfang eines durch die übergeordnete Zertifizierungsinstanz für das erste Schlüsselpaar erzeugten Zertifikats den abgesicherten Betrieb zu beenden,
- die lokale Zertifizierungsinstanz (114, 124) ferner dafür ausgestaltet und eingerichtet ist, nach Beenden des abgesicherten Betriebs für einen kryptographisch gesicherten Austausch von Daten vom und/oder zum Endgerät zumindest ein zweites Schlüsselpaar und ein Zertifikat für das zweite Schlüsselpaar zu erzeugen, wobei dieses Zertifikat mittels eines vom ersten Schlüsselpaar umfassten privaten Schlüssels signiert ist.

13. Endgerät nach Anspruch 12,
bei dem das Endgerät zur Durchführung eines Verfahrens nach einem der Ansprüche 1 bis 12 ausgestaltet und eingerichtet ist.

## Claims

1. Method for cryptographically secured transmission of data within a communication system, in which
- the communication system comprises at least one switch (103) or router and a plurality of terminal devices (101-102) which exchange data for controlling machines or apparatuses (110),
- the terminal devices (101-102) in each case comprise a local certification instance (111, 121) which, when the respective terminal device is commissioned, generates a first key pair for the terminal device and a request (114, 124) to create a certificate assigned to the first key pair and, during protected operation of the terminal device, transmits the request to a higher-level certification instance (100), wherein, during the protected operation of the terminal devices (101-102), only communication between the respective local certification instance (111, 121) and the higher-level certification instance (100) is possible,
- the higher-level certification instance (100) in each case checks the requests (114, 124) of the local certification instances of the terminal devices and, if the check is successful, creates a certificate (115, 125) assigned to the respective first key pair and transmits it to the respective local certification instance (111, 121),
- the terminal devices (101-102) in each case terminate protected operation after receiving the certificate generated by the higher-level certification instance,
- after the termination of protected operation, the local certification instances (111, 121) in each case generate at least a second key pair and a certificate for the second key pair for cryptographically secured exchange of data (116, 126) from and to the terminal devices, wherein this certificate is signed by means of a private key comprised by the first key pair.

2. Method according to claim 1,
in which in each case a predetermined default gateway configuration and/or predetermined firewall settings are activated for the protected operation of the terminal devices.

3. Method according to one of claims 1 to 2,
in which the terminal devices and the higher-level certification instance are in each case connected to one another during the protected operation of the terminal devices within an environment isolated from other terminal devices.

4. Method according to one of claims 1 to 3,
in which the requests of the local certification instances in each case comprise an identifier of the respective terminal device and/or a signature created by the respective local certification instance and in which checking the requests by the higher-level certification instance in each case comprises checking the validity of the identifier of the respective terminal device and/or the signature created by the respective local certification instance.

5. Method according to one of claims 1 to 4,
in which the exchange of data from and/or to the terminal devices is in each case cryptographically secured by means of the second key pair.

6. Method according to claim 5,
in which the certificate for the second key pair signed by means of the private key comprised by the first key pair is verified by a communication partner of the respective terminal device during the exchange of data using a root certificate of the higher-level certification instance.

7. Method according to one of claims 1 to 6,
in which the requests created by the local certification instances are certificate signing requests and in which the certificates generated by the higher-level certification instance are issuing certificates, TLS or SSL client certificates and/or TLS or SSL server certificates.

8. Method according to one of claims 1 to 7,
in which the higher-level certification instance and the local certification instances in each case comprise functions of a certification authority.

9. Method according to claim 8,
in which the local certification instances in each case comprise functions of a registration authority assigned to the higher-level certification instance.

10. Method according to one of claims 1 to 9,
in which the communication system is comprised by an industrial automation system.

11. Method according to one of claims 1 to 10,
in which the terminal devices in each case automatically generate a new second key pair and a certificate for the new second key pair in the event of a loss of validity of the certificate for the second key pair caused by a configuration change.

12. Terminal device for cryptographically secured transmission of data within a communication system, wherein
- the terminal device is designed and configured to exchange data (116, 126) within the communication system for controlling machines and/or apparatuses (100),
- the terminal device comprises a local certification instance (111, 121), which is designed and configured, when the terminal device is commissioned, to generate a first key pair for the terminal device and a request (114, 124) to create a certificate assigned to the first key pair and, during protected operation of the terminal device, to transmit the request to a higher-level certification instance (100), wherein during protected operation communication is only possible between the local certification instance and the higher-level certification instance,
- the terminal device is further designed and configured, after reception of a certificate generated by the higher-level certification instance for the first key pair, to terminate protected operation,
- the local certification instance (114, 124) is further designed and configured, after the termination of protected operation, to generate at least a second key pair and a certificate for the second key pair for cryptographically secured exchange of data from and/or to the terminal device, wherein this certificate is signed by means of a private key comprised by the first key pair.

13. Terminal device according to claim 12, in which the terminal device is designed and configured to perform a method according to one of claims 1 to 12.

## Revendications

1. Procédé de transmission sécurisée cryptographiquement de données dans un système de communication, dans lequel
- le système de communication comprend au moins un switch (103) ou un routeur et plusieurs terminaux (101-102), qui échangent des données pour la commande de machines ou de dispositifs (110),
- les terminaux (101-102) comprennent chacun une instance (111, 121) locale de certification, qui, lors de la mise en service du terminal respectif, produit une première paire de clés pour le terminal et une demande (114, 124) d'établissement d'un certificat associé à la première paire de clés et, dans le cadre d'un fonctionnement envisagé du terminal, transmet la demande à une instance (100) supérieure hiérarchiquement de certification, dans lequel, pendant le fonctionnement envisagé des terminaux (101-102), seule une communication entre l'instance (111, 121) locale respective de certification et l'instance (100) supérieure hiérarchiquement de certification est possible,
- l'instance (100) supérieure hiérarchiquement de certification contrôle respectivement les demandes (114, 124) des instances locales de certification des terminaux et, si le contrôle est couronné de succès, établit un certificat (115, 125) associé à la première paire de clés respective et le transmet à l'instance (111, 121) locale respective de certification,
- les terminaux (101-102) mettent chacun, après réception du certificat produit par l'instance supérieure hiérarchiquement de certification, fin au fonctionnement envisagé,
- les instances (111, 121) locales de certification produisent, après qu'il a été mis fin au fonctionnement envisagé, pour un échange sécurisé cryptographiquement de données (116, 126) de et aux terminaux, respectivement au moins une deuxième paire de clés et un certificat pour la deuxième paire de clés, dans lequel ce certificat est signé au moyen d'une clé privée comprise par la première paire de clés.

2. Procédé suivant la revendication 1,
dans lequel, pour le fonctionnement envisagé des terminaux, on active respectivement une configuration de gateway de défaut donnée à l'avance et/ou des réglages de firewall donnés à l'avance.

3. Procédé suivant l'une des revendications 1 à 2,
dans lequel les terminaux et l'instance supérieure hiérarchiquement de certification sont reliés les uns aux autres pendant le fonctionnement sécurisé des terminaux respectivement dans un environnement isolé par rapport à d'autres terminaux.

4. Procédé suivant l'une des revendications 1 à 3,
dans lequel les demandes des instances locales de certification comprennent chacune un identifiant du terminal respectif et/ou une signature établie par l'instance locale respective de certification et dans lequel le contrôle des demandes par l'instance supérieure hiérarchiquement de certification comprend respectivement un contrôle de l'identifiant du terminal respectif et/ou de la validité de la signature établie par l'instance locale respective de certification.

5. Procédé suivant l'une des revendications 1 à 4,
dans lequel on sécurise cryptographiquement l'échange de données de et/ou aux terminaux respectivement au moyen de la deuxième paire de clés.

6. Procédé suivant la revendication 5,
dans lequel le certificat signé au moyen de la clé privée comprise par la première paire de clés est, pour la deuxième paire de clés, vérifié par un partenaire de communication du terminal respectif, lors de l'échange de données en utilisant un certificat racine de l'instance supérieure hiérarchiquement de certification.

7. Procédé suivant l'une des revendications 1 à 6,
dans lequel les demandes établies par les instances locales de certification sont des certificate signing requests et dans lequel les certificats produits par l'instance supérieure hiérarchiquement de certification sont des issuing certificats, des TLS ou SSL client certificats et/ou des TLS ou SSL server certificats.

8. Procédé suivant l'une des revendications 1 à 7,
dans lequel l'instance supérieure hiérarchiquement de certification et les instances locales de certification comprennent chacune des fonctions d'une certification authority.

9. Procédé suivant la revendication 8,
dans lequel les instances locales de certification comprennent chacune des fonctions d'une registration authority associée à l'instance supérieure hiérarchiquement de certification.

10. Procédé suivant l'une des revendications 1 à 9,
dans lequel le système de communication est contenu dans un système d'automatisation industrielle.

11. Procédé suivant l'une des revendications 1 à 10,
dans lequel les terminaux produisent chacun, lors d'une perte de validité, due à une modification de configuration, du certificat pour la deuxième paire de clés, automatiquement une nouvelle deuxième paire de clés et un certificat pour la nouvelle deuxième paire de clés.

12. Terminal pour la transmission sécurisée cryptographiquement de données dans un système de communication, dans lequel
- le terminal est conformé et agencé pour échanger dans le système de communication des données (116, 126) de commande de machines et/ou de dispositifs (100),
- le terminal comprend une instance (111, 121) locale de certification, qui est conformée et agencée pour produire, lors d'une mise en service du terminal, une première paire de clés pour le terminal et une demande (114, 124) d'établissement d'un certificat associé à la première paire de clés et, dans le cadre d'un fonctionnement sécurisé du terminal, transmettre la demande à une instance (100) supérieure hiérarchiquement de certification, dans lequel, pendant le fonctionnement sécurisé, seule une communication entre l'instance locale de certification et l'instance supérieure hiérarchiquement de certification est possible,
- le terminal est conformé et agencé, en outre pour, après réception d'un certificat produit pour la première paire de clés par l'instance supérieure hiérarchiquement de certification, mettre fin au fonctionnement sécurisé,
- l'instance (114, 124) locale de certification est, en outre, conformée et agencée pour, après qu'il a été mis fin au fonctionnement sécurisé, produire pour un échange sécurisé cryptographiquement de données de et/ou au terminal, au moins une deuxième paire de clés et un certificat pour la deuxième paire de clés, dans lequel ce certificat est signé au moyen d'une clé privée comprise par la première paire de clés.

13. Terminal suivant la revendication 12,
dans lequel le terminal est conformé et agencé pour effectuer un procédé suivant l'une des revendications 1 à 12.
